# EUROPEAN PATENT SPECIFICATION

(11) **EP 4 214 959 B1**
(45) Date of publication and mention of the grant of the patent: **28.01.2026**
(21) Application number: 21769583.2
(22) Date of filing: 19.08.2021
(51) Int. Cl.: H04W 36/00, H04W 36/36, H04W 48/12

(54) **PRIORITIZATION AT CELL RESELECTION BY UE OF MCG AND SCG CELLS OVER NEIGHBOR CELLS CONFIGURED WITH HIGHER PRIORITY BY THE NETWORK**
PRIORISIERUNG BEI DER ZELLENNEUAUSWAHL DURCH UE VON MCG- UND SCG-ZELLEN ÜBER NACHBARZELLEN MIT HÖHERER PRIORITÄT DURCH DAS NETZWERK
PRIORISATION AU NIVEAU DE LA RESÉLECTION DE CELLULES PAR UN UE DE CELLULES MCG ET SCG PAR RAPPORT À DES CELLULES VOISINES CONFIGURÉES AVEC UNE PRIORITÉ SUPÉRIEURE PAR LE RÉSEAU

(30) Priority: 15.09.2020 IN 202041039913
(43) Date of publication of application: 26.07.2023
(73) Proprietor: QUALCOMM INCORPORATED, San Diego, California 92121-1714 (US)
(72) Inventor: SHEIK, Ansah Ahmed, San Diego, California 92121-1714 (US); PADHY, Chinmaya, San Diego, California 92121-1714 (US); KARAKKAD KESAVAN NAMBOODIRI, Vishnu Namboodiri, San Diego, California 92121-1714 (US)
(74) Representative: Bardehle Pagenberg Partnerschaft mbB Patentanwälte Rechtsanwälte
(86) International application number: PCT/US2021/046673
(87) International publication number: WO 2022/060519

(56) References cited:
- WO-A1-2020/193789
- US-A1- 2019 349 825
- CHINA TELECOM ET AL: "Support for Randomized threshold offset based reselection", vol. RAN WG2, no. Malmo, Sweden; 20151005 - 20151009, 4 October 2015 (2015-10-04), XP051004615, Retrieved from the Internet <URL:http://www.3gpp.org/ftp/Meetings_3GPP_SYNC/RAN2/Docs/> [retrieved on 20151004]
- ERICSSON: "CR to 38.331 on UE AS Context definition - Include suspendConfig", vol. RAN WG2, no. Spokane, USA; 20181112 - 20181116, 6 December 2018 (2018-12-06), XP051501289, Retrieved from the Internet <URL:http://www.3gpp.org/ftp/3guInternal/3GPP%5FUltimate%5FCRPacks/RP%2D182667%2Ezip> [retrieved on 20181206]

## Description

### FIELD OF TECHNOLOGY

The following relates to wireless communications, including novel methods to prioritize master cell group (MCG) and secondary cell group (SCG) cells over cells configured by network neighbor.

### BACKGROUND

Wireless communications systems are widely deployed to provide various types of communication content such as voice, video, packet data, messaging, broadcast, and so on. These systems may be capable of supporting communication with multiple users by sharing the available system resources (e.g., time, frequency, and power). Examples of such multiple-access systems include fourth generation (4G) systems such as Long Term Evolution (LTE) systems, LTE-Advanced (LTE-A) systems, or LTE-A Pro systems, and fifth generation (5G) systems which may be referred to as New Radio (NR) systems. These systems may employ technologies such as code division multiple access (CDMA), time division multiple access (TDMA), frequency division multiple access (FDMA), orthogonal frequency division multiple access (OFDMA), or discrete Fourier transform spread orthogonal frequency division multiplexing (DFT-S-OFDM). A wireless multiple-access communications system may include one or more base stations or one or more network access nodes, each simultaneously supporting communication for multiple communication devices, which may be otherwise known as user equipment (UE).

A UE with low data activity may enter an inactive state for power saving purposes. A UE may also be configured with information regarding various cells, and this information may be used to restore configurations for efficient resumption of communications upon transitioning from the inactive state to an active state. In some cases, a UE may establish a connection with a neighboring cell, which may require full connection establishment procedures.

US 2019/349825 A1 discloses a method for a user equipment (UE) for cell (re)selection, while the UE is in a radio resource control (RRC) inactive state. The method includes assigning a cell (re)selection priority level to a plurality of candidate cells based on a core network connection support of each of the plurality of candidate cells, and selecting, in a cell (re)selection procedure, a serving cell from the plurality of candidate cells, the serving cell having a highest cell (re)selection priority level.

CHINA TELECOM ET AL: "Support for Randomized threshold offset based reselection", 3GPP DRAFT R2-154128 discusses cell reselection evaluation for the cell with cell reselection offset on the higher priority frequency based on a per-cell reselection threshold offset included in SIB5.

ERICSSON: "CR to 38.331 on UE AS Context definition - Include suspendConfig", 3GPP DRAFT R2-1819165 introduces a definition for UE Inactive AS context.

### SUMMARY

The invention is set out in the claims.

References in the following to techniques, examples and aspects not falling within the scope of the claims are deemed useful for understanding the invention.

The described techniques relate to improved methods, systems, devices, and apparatuses that support novel methods to prioritize master cell group (MCG) and secondary cell group (SCG) cells over cells configured by network neighbor. Generally, the described techniques provide for a user equipment (UE) receiving a cell reselection priority from a base station. The cell reselection priority corresponds to evaluation of a plurality cells including a neighboring cell, a MCG cell, and a SCG cell. The cell reselection priority may indicate that the neighboring cell is assigned a higher priority than the MCG cell, the SCG cell, or both that are configured at the UE. The UE may perform a cell reselection procedure that prioritizes selection of the MCG cell, the SCG cell, or both, over the neighboring cell. At some time, the UE may transition from an inactive state to an active state and establish a connection with one of the plurality of cells based on the cell reselection procedure.

A method of wireless communication at a UE is described. The method may include receiving, from a base station, system information that indicates a cell reselection priority for evaluating each cell of a set of cells including a neighboring cell, a MCG cell, and a SCG cell, the cell reselection priority indicating that the neighboring cell is assigned a higher priority than the MCG cell, the SCG cell, or both, configured at the UE, performing a cell reselection procedure that prioritizes reselection of the MCG cell, the SCG cell, or both, over the neighboring cell, and establishing, after the UE transitions from an inactive state to an active state, a connection with a first cell of the set of cells based on the cell reselection procedure.

An apparatus for wireless communication at a UE is described. The apparatus may include a processor, memory coupled with the processor, and instructions stored in the memory. The instructions may be executable by the processor to cause the apparatus to receive, from a base station, system information that indicates a cell reselection priority for evaluating each cell of a set of cells including a neighboring cell, a MCG cell, and a SCG cell, the cell reselection priority indicating that the neighboring cell is assigned a higher priority than the MCG cell, the SCG cell, or both, configured at the UE, perform a cell reselection procedure that prioritizes reselection of the MCG cell, the SCG cell, or both, over the neighboring cell, and establish, after the UE transitions from an inactive state to an active state, a connection with a first cell of the set of cells based on the cell reselection procedure.

Another apparatus for wireless communication at a UE is described. The apparatus may include means for receiving, from a base station, system information that indicates a cell reselection priority for evaluating each cell of a set of cells including a neighboring cell, a MCG cell, and a SCG cell, the cell reselection priority indicating that the neighboring cell is assigned a higher priority than the MCG cell, the SCG cell, or both, configured at the UE, performing a cell reselection procedure that prioritizes reselection of the MCG cell, the SCG cell, or both, over the neighboring cell, and establishing, after the UE transitions from an inactive state to an active state, a connection with a first cell of the set of cells based on the cell reselection procedure.

A non-transitory computer-readable medium storing code for wireless communication at a UE is described. The code may include instructions executable by a processor to receive, from a base station, system information that indicates a cell reselection priority for evaluating each cell of a set of cells including a neighboring cell, a MCG cell, and a SCG cell, the cell reselection priority indicating that the neighboring cell is assigned a higher priority than the MCG cell, the SCG cell, or both, configured at the UE, perform a cell reselection procedure that prioritizes reselection of the MCG cell, the SCG cell, or both, over the neighboring cell, and establish, after the UE transitions from an inactive state to an active state, a connection with a first cell of the set of cells based on the cell reselection procedure.

In some examples of the method, apparatuses, and non-transitory computer-readable medium described herein, establishing the connection with the first cell may include operations, features, means, or instructions for establishing the connection with the first cell that may be the MCG cell or the SCG cell using a configuration of the MCG cell or the SCG cell that may be configured prior to transitioning from the active state to the inactive state.

In some examples of the method, apparatuses, and non-transitory computer-readable medium described herein, performing the cell reselection procedure may include operations, features, means, or instructions for monitoring the MCG cell or the SCG cell in accordance with a first periodicity that may be shorter in time than a second periodicity at which the UE monitors for the neighboring cell.

In some examples of the method, apparatuses, and non-transitory computer-readable medium described herein, performing the cell reselection procedure may include operations, features, means, or instructions for performing a measurement of a first signal of the MCG cell or the SCG cell according to the first periodicity, and performing a measurement of a second signal of the neighboring cell according to the second periodicity.

In some examples of the method, apparatuses, and non-transitory computer-readable medium described herein, establishing the connection with the first cell may include operations, features, means, or instructions for establishing the connection with the first cell that may be the neighboring cell within a time period based on a signal of the neighboring cell satisfying a first threshold that may be offset relative to a second threshold monitored for establishing connectivity with the MCG cell, the SCG cell, or both.

In some examples of the method, apparatuses, and non-transitory computer-readable medium described herein, the first threshold corresponds to a higher signal level than the second threshold.

Some examples of the method, apparatuses, and non-transitory computer-readable medium described herein may further include operations, features, means, or instructions for initiating a timer in response to transitioning to the inactive state, and evaluating the MCG cell and the SCG cell before expiration of the timer.

Some examples of the method, apparatuses, and non-transitory computer-readable medium described herein may further include operations, features, means, or instructions for evaluating the neighboring cell after expiration of the timer.

Some examples of the method, apparatuses, and non-transitory computer-readable medium described herein may further include operations, features, means, or instructions for determining a duration of the timer based on frequency of transitioning from the active state to the inactive state during a time period.

In some examples of the method, apparatuses, and non-transitory computer-readable medium described herein, performing the cell reselection procedure may include operations, features, means, or instructions for evaluating one or more cells of the set of cells in accordance with the cell reselection priority indicated in the system information based on the UE being in a panic mode.

In some examples of the method, apparatuses, and non-transitory computer-readable medium described herein, performing the cell reselection procedure may include operations, features, means, or instructions for determining an evaluation order indicating an order in which to evaluate the set of cells based on assigning a higher priority to the MCG cell, the SCG cell, or both, than the neighboring cell, and evaluating one or more cells of the set of cells in accordance with the evaluation order.

Some examples of the method, apparatuses, and non-transitory computer-readable medium described herein may further include operations, features, means, or instructions for determining that the neighboring cell may be associated with a different frequency than the MCG cell and the SCG cell, a different radio access technology than the MCG cell and the SCG cell, or both.

### BRIEF DESCRIPTION OF THE DRAWINGS

FIG. 1 illustrates an example of a system for wireless communications supporting aspects of the present disclosure.
FIG. 2 illustrates an example of a wireless communications system supporting aspects of the present disclosure.
FIG. 3 illustrates an example of a wireless communications system supporting aspects of the present disclosure.
FIGs. 4 and 5 show block diagrams of devices that support novel methods to prioritize MCG and SCG cells over cells configured by network neighbor in accordance with aspects of the present disclosure.
FIG. 6 shows a block diagram of a communications manager supporting aspects of the present disclosure.
FIG. 7 shows a diagram of a system including a device in accordance with aspects of the present disclosure.
FIGs. 8 and 9 show flowcharts illustrating methods in accordance with aspects of the present disclosure.

### DETAILED DESCRIPTION

A wireless communications network may support communications with various user equipments (UEs). A base station may configure a UE with information associated with a master cell group (MCG) and a secondary cell group (SCG) to support dual-connectivity, carrier aggregation, and other services. The UE may communicate with one or more cells of the MCG and one or more cells of the SCG using the configured information. The information may support efficient transitions between cells as the UE moves about a geographic location and as channel conditions change. In some cases, wireless communications system support UEs transitioning to an inactive state responsive to periods of low data activity by the UEs. In an inactive state, the UE may not monitor data channels or transmit using data channels on one or more cells, such as to conserve power.

While in an inactive state, the UE may perform cell reselection procedures by monitoring channel conditions associated with one or more cells. If measurements associated with one or more cells satisfy a condition or a measurement threshold, then the UE may establish a connection with the cell. However, if the information about the cell is not configured at the UE, then the UE may perform a full reselection procedure, which may utilize significant processing, memory, power resources, and the like. In some cases, the UE may reselect to an unconfigured cell when one of the configured cells is adequate to support communications.

Examples described herein support prioritization of cells that are configured at the UE over neighboring cells (e.g., that are unconfigured) for cell reselection while the UE is in an inactive state. By prioritizing the configured cells, the UE may not use resources reselecting to unconfigured cells when the configured cells are adequate to support communications. The configured cells may be the cells of the MCG and the SCG. To support prioritization, the UE may evaluate the configured cells before the neighboring cells, may use different evaluation thresholds (e.g., measurement thresholds), different evaluation periodicities, among other techniques.

Particular aspects of the subject matter described herein may be implemented to realize one or more advantages. The described techniques may support improvements in the inactive state and cell reselection framework, decreasing signaling overhead, and improving reliability, among other advantages. As such, supported techniques may include improved network operations and, in some examples, may promote network efficiencies, among other benefits.

Aspects of the disclosure are initially described in the context of wireless communications systems. Aspects of the disclosure are further described with respect to a wireless communications system and a process flow diagram. Aspects of the disclosure are further illustrated by and described with reference to apparatus diagrams, system diagrams, and flowcharts that relate to novel methods to prioritize MCG and SCG cells over cells configured by network neighbor.

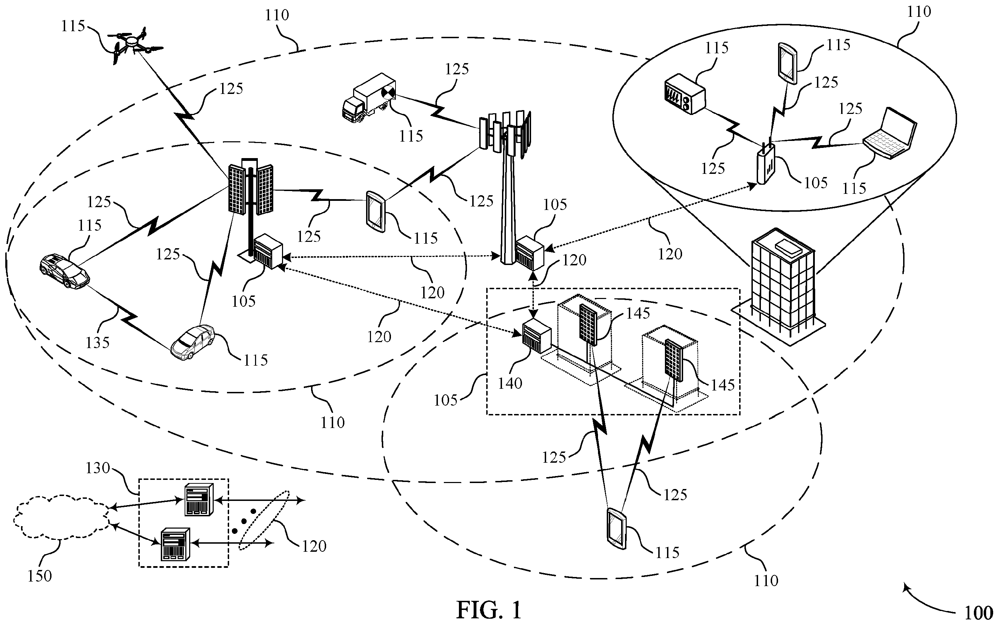

**FIG. 1** illustrates an example of a wireless communications system 100 supporting aspects of the present disclosure. The wireless communications system 100 may include one or more base stations 105, one or more UEs 115, and a core network 130. In some examples, the wireless communications system 100 may be a Long Term Evolution (LTE) network, an LTE-Advanced (LTE-A) network, an LTE-A Pro network, or a New Radio (NR) network. In some examples, the wireless communications system 100 may support enhanced broadband communications, ultra-reliable (e.g., mission critical) communications, low latency communications, communications with low-cost and low-complexity devices, or any combination thereof.

The base stations 105 may be dispersed throughout a geographic area to form the wireless communications system 100 and may be devices in different forms or having different capabilities. The base stations 105 and the UEs 115 may wirelessly communicate via one or more communication links 125. Each base station 105 may provide a coverage area 110 over which the UEs 115 and the base station 105 may establish one or more communication links 125. The coverage area 110 may be an example of a geographic area over which a base station 105 and a UE 115 may support the communication of signals according to one or more radio access technologies.

The UEs 115 may be dispersed throughout a coverage area 110 of the wireless communications system 100, and each UE 115 may be stationary, or mobile, or both at different times. The UEs 115 may be devices in different forms or having different capabilities. Some example UEs 115 are illustrated in FIG. 1. The UEs 115 described herein may be able to communicate with various types of devices, such as other UEs 115, the base stations 105, or network equipment (e.g., core network nodes, relay devices, integrated access and backhaul (IAB) nodes, or other network equipment), as shown in FIG. 1.

The base stations 105 may communicate with the core network 130, or with one another, or both. For example, the base stations 105 may interface with the core network 130 through one or more backhaul links 120 (e.g., via an S1, N2, N3, or other interface). The base stations 105 may communicate with one another over the backhaul links 120 (e.g., via an X2, Xn, or other interface) either directly (e.g., directly between base stations 105), or indirectly (e.g., via core network 130), or both. In some examples, the backhaul links 120 may be or include one or more wireless links.

One or more of the base stations 105 described herein may include or may be referred to by a person having ordinary skill in the art as a base transceiver station, a radio base station, an access point, a radio transceiver, a NodeB, an eNodeB (eNB), a next-generation NodeB or a giga-NodeB (either of which may be referred to as a gNB), a Home NodeB, a Home eNodeB, or other suitable terminology.

A UE 115 may include or may be referred to as a mobile device, a wireless device, a remote device, a handheld device, or a subscriber device, or some other suitable terminology, where the "device" may also be referred to as a unit, a station, a terminal, or a client, among other examples. A UE 115 may also include or may be referred to as a personal electronic device such as a cellular phone, a personal digital assistant (PDA), a tablet computer, a laptop computer, or a personal computer. In some examples, a UE 115 may include or be referred to as a wireless local loop (WLL) station, an Internet of Things (IoT) device, an Internet of Everything (IoE) device, or a machine type communications (MTC) device, among other examples, which may be implemented in various objects such as appliances, or vehicles, meters, among other examples.

The UEs 115 described herein may be able to communicate with various types of devices, such as other UEs 115 that may sometimes act as relays as well as the base stations 105 and the network equipment including macro eNBs or gNBs, small cell eNBs or gNBs, or relay base stations, among other examples, as shown in FIG. 1.

The UEs 115 and the base stations 105 may wirelessly communicate with one another via one or more communication links 125 over one or more carriers. The term "carrier" may refer to a set of radio frequency spectrum resources having a defined physical layer structure for supporting the communication links 125. For example, a carrier used for a communication link 125 may include a portion of a radio frequency spectrum band (e.g., a bandwidth part (BWP)) that is operated according to one or more physical layer channels for a given radio access technology (e.g., LTE, LTE-A, LTE-A Pro, NR). Each physical layer channel may carry acquisition signaling (e.g., synchronization signals, system information), control signaling that coordinates operation for the carrier, user data, or other signaling. The wireless communications system 100 may support communication with a UE 115 using carrier aggregation or multi-carrier operation. A UE 115 may be configured with multiple downlink component carriers and one or more uplink component carriers according to a carrier aggregation configuration. Carrier aggregation may be used with both frequency division duplexing (FDD) and time division duplexing (TDD) component carriers.

In some examples (e.g., in a carrier aggregation configuration), a carrier may also have acquisition signaling or control signaling that coordinates operations for other carriers. A carrier may be associated with a frequency channel (e.g., an evolved universal mobile telecommunication system terrestrial radio access (E-UTRA) absolute radio frequency channel number (EARFCN)) and may be positioned according to a channel raster for discovery by the UEs 115. A carrier may be operated in a standalone mode where initial acquisition and connection may be conducted by the UEs 115 via the carrier, or the carrier may be operated in a non-standalone mode where a connection is anchored using a different carrier (e.g., of the same or a different radio access technology).

The communication links 125 shown in the wireless communications system 100 may include uplink transmissions from a UE 115 to a base station 105, or downlink transmissions from a base station 105 to a UE 115. Carriers may carry downlink or uplink communications (e.g., in an FDD mode) or may be configured to carry downlink and uplink communications (e.g., in a TDD mode).

A carrier may be associated with a particular bandwidth of the radio frequency spectrum, and in some examples the carrier bandwidth may be referred to as a "system bandwidth" of the carrier or the wireless communications system 100. For example, the carrier bandwidth may be one of a number of determined bandwidths for carriers of a particular radio access technology (e.g., 1.4, 3, 5, 10, 15, 20, 40, or 80 megahertz (MHz)). Devices of the wireless communications system 100 (e.g., the base stations 105, the UEs 115, or both) may have hardware configurations that support communications over a particular carrier bandwidth or may be configurable to support communications over one of a set of carrier bandwidths. In some examples, the wireless communications system 100 may include base stations 105 or UEs 115 that support simultaneous communications via carriers associated with multiple carrier bandwidths. In some examples, each served UE 115 may be configured for operating over portions (e.g., a sub-band, a BWP) or all of a carrier bandwidth.

Signal waveforms transmitted over a carrier may be made up of multiple subcarriers (e.g., using multi-carrier modulation (MCM) techniques such as orthogonal frequency division multiplexing (OFDM) or discrete Fourier transform spread OFDM (DFT-S-OFDM)). In a system employing MCM techniques, a resource element may consist of one symbol period (e.g., a duration of one modulation symbol) and one subcarrier, where the symbol period and subcarrier spacing are inversely related. The number of bits carried by each resource element may depend on the modulation scheme (e.g., the order of the modulation scheme, the coding rate of the modulation scheme, or both). Thus, the more resource elements that a UE 115 receives and the higher the order of the modulation scheme, the higher the data rate may be for the UE 115. A wireless communications resource may refer to a combination of a radio frequency spectrum resource, a time resource, and a spatial resource (e.g., spatial layers or beams), and the use of multiple spatial layers may further increase the data rate or data integrity for communications with a UE 115.

One or more numerologies for a carrier may be supported, where a numerology may include a subcarrier spacing (Δ*f*) and a cyclic prefix. A carrier may be divided into one or more BWPs having the same or different numerologies. In some examples, a UE 115 may be configured with multiple BWPs. In some examples, a single BWP for a carrier may be active at a given time and communications for the UE 115 may be restricted to one or more active BWPs.

The time intervals for the base stations 105 or the UEs 115 may be expressed in multiples of a basic time unit which may, for example, refer to a sampling period of *Tₛ =* 1/(Δ*fₘₐₓ* · *N_{f}*) seconds, where Δ*fₘₐₓ* may represent the maximum supported subcarrier spacing, and *N_{f}* may represent the maximum supported discrete Fourier transform (DFT) size. Time intervals of a communications resource may be organized according to radio frames each having a specified duration (e.g., 10 milliseconds (ms)). Each radio frame may be identified by a system frame number (SFN) (e.g., ranging from 0 to 1023).

Each frame may include multiple consecutively numbered subframes or slots, and each subframe or slot may have the same duration. In some examples, a frame may be divided (e.g., in the time domain) into subframes, and each subframe may be further divided into a number of slots. Alternatively, each frame may include a variable number of slots, and the number of slots may depend on subcarrier spacing. Each slot may include a number of symbol periods (e.g., depending on the length of the cyclic prefix prepended to each symbol period). In some wireless communications systems 100, a slot may further be divided into multiple mini-slots containing one or more symbols. Excluding the cyclic prefix, each symbol period may contain one or more (e.g., *N_{f}*) sampling periods. The duration of a symbol period may depend on the subcarrier spacing or frequency band of operation.

A subframe, a slot, a mini-slot, or a symbol may be the smallest scheduling unit (e.g., in the time domain) of the wireless communications system 100 and may be referred to as a transmission time interval (TTI). In some examples, the TTI duration (e.g., the number of symbol periods in a TTI) may be variable. Additionally or alternatively, the smallest scheduling unit of the wireless communications system 100 may be dynamically selected (e.g., in bursts of shortened TTIs (sTTIs)).

Physical channels may be multiplexed on a carrier according to various techniques. A physical control channel and a physical data channel may be multiplexed on a downlink carrier, for example, using one or more of time division multiplexing (TDM) techniques, frequency division multiplexing (FDM) techniques, or hybrid TDM-FDM techniques. A control region (e.g., a control resource set (CORESET)) for a physical control channel may be defined by a number of symbol periods and may extend across the system bandwidth or a subset of the system bandwidth of the carrier. One or more control regions (e.g., CORESETs) may be configured for a set of the UEs 115. For example, one or more of the UEs 115 may monitor or search control regions for control information according to one or more search space sets, and each search space set may include one or multiple control channel candidates in one or more aggregation levels arranged in a cascaded manner. An aggregation level for a control channel candidate may refer to a number of control channel resources (e.g., control channel elements (CCEs)) associated with encoded information for a control information format having a given payload size. Search space sets may include common search space sets configured for sending control information to multiple UEs 115 and UE-specific search space sets for sending control information to a specific UE 115.

Each base station 105 may provide communication coverage via one or more cells, for example a macro cell, a small cell, a hot spot, or other types of cells, or any combination thereof. The term "cell" may refer to a logical communication entity used for communication with a base station 105 (e.g., over a carrier) and may be associated with an identifier for distinguishing neighboring cells (e.g., a physical cell identifier (PCID), a virtual cell identifier (VCID), or others). In some examples, a cell may also refer to a geographic coverage area 110 or a portion of a geographic coverage area 110 (e.g., a sector) over which the logical communication entity operates. Such cells may range from smaller areas (e.g., a structure, a subset of structure) to larger areas depending on various factors such as the capabilities of the base station 105. For example, a cell may be or include a building, a subset of a building, or exterior spaces between or overlapping with geographic coverage areas 110, among other examples.

A macro cell generally covers a relatively large geographic area (e.g., several kilometers in radius) and may allow unrestricted access by the UEs 115 with service subscriptions with the network provider supporting the macro cell. A small cell may be associated with a lower-powered base station 105, as compared with a macro cell, and a small cell may operate in the same or different (e.g., licensed, unlicensed) frequency bands as macro cells. Small cells may provide unrestricted access to the UEs 115 with service subscriptions with the network provider or may provide restricted access to the UEs 115 having an association with the small cell (e.g., the UEs 115 in a closed subscriber group (CSG), the UEs 115 associated with users in a home or office). A base station 105 may support one or multiple cells and may also support communications over the one or more cells using one or multiple component carriers.

In some examples, a carrier may support multiple cells, and different cells may be configured according to different protocol types (e.g., MTC, narrowband IoT (NB-IoT), enhanced mobile broadband (eMBB)) that may provide access for different types of devices.

In some examples, a base station 105 may be movable and therefore provide communication coverage for a moving geographic coverage area 110. In some examples, different geographic coverage areas 110 associated with different technologies may overlap, but the different geographic coverage areas 110 may be supported by the same base station 105. In other examples, the overlapping geographic coverage areas 110 associated with different technologies may be supported by different base stations 105. The wireless communications system 100 may include, for example, a heterogeneous network in which different types of the base stations 105 provide coverage for various geographic coverage areas 110 using the same or different radio access technologies.

The wireless communications system 100 may support synchronous or asynchronous operation. For synchronous operation, the base stations 105 may have similar frame timings, and transmissions from different base stations 105 may be approximately aligned in time. For asynchronous operation, the base stations 105 may have different frame timings, and transmissions from different base stations 105 may, in some examples, not be aligned in time. The techniques described herein may be used for either synchronous or asynchronous operations.

Some UEs 115, such as MTC or IoT devices, may be low cost or low complexity devices and may provide for automated communication between machines (e.g., via Machine-to-Machine (M2M) communication). M2M communication or MTC may refer to data communication technologies that allow devices to communicate with one another or a base station 105 without human intervention. In some examples, M2M communication or MTC may include communications from devices that integrate sensors or meters to measure or capture information and relay such information to a central server or application program that makes use of the information or presents the information to humans interacting with the application program. Some UEs 115 may be designed to collect information or enable automated behavior of machines or other devices. Examples of applications for MTC devices include smart metering, inventory monitoring, water level monitoring, equipment monitoring, healthcare monitoring, wildlife monitoring, weather and geological event monitoring, fleet management and tracking, remote security sensing, physical access control, and transaction-based business charging.

Some UEs 115 may be configured to employ operating modes that reduce power consumption, such as half-duplex communications (e.g., a mode that supports one-way communication via transmission or reception, but not transmission and reception simultaneously). In some examples, half-duplex communications may be performed at a reduced peak rate. Other power conservation techniques for the UEs 115 include entering a power saving deep sleep mode when not engaging in active communications, operating over a limited bandwidth (e.g., according to narrowband communications), or a combination of these techniques. For example, some UEs 115 may be configured for operation using a narrowband protocol type that is associated with a defined portion or range (e.g., set of subcarriers or resource blocks (RBs)) within a carrier, within a guard-band of a carrier, or outside of a carrier.

The wireless communications system 100 may be configured to support ultra-reliable communications or low-latency communications, or various combinations thereof. For example, the wireless communications system 100 may be configured to support ultra-reliable low-latency communications (URLLC) or mission critical communications. The UEs 115 may be designed to support ultra-reliable, low-latency, or critical functions (e.g., mission critical functions). Ultra-reliable communications may include private communication or group communication and may be supported by one or more mission critical services such as mission critical push-to-talk (MCPTT), mission critical video (MCVideo), or mission critical data (MCData). Support for mission critical functions may include prioritization of services, and mission critical services may be used for public safety or general commercial applications. The terms ultra-reliable, low-latency, mission critical, and ultra-reliable low-latency may be used interchangeably herein.

In some examples, a UE 115 may also be able to communicate directly with other UEs 115 over a device-to-device (D2D) communication link 135 (e.g., using a peer-to-peer (P2P) or D2D protocol). One or more UEs 115 utilizing D2D communications may be within the geographic coverage area 110 of a base station 105. Other UEs 115 in such a group may be outside the geographic coverage area 110 of a base station 105 or be otherwise unable to receive transmissions from a base station 105. In some examples, groups of the UEs 115 communicating via D2D communications may utilize a one-to-many (1:M) system in which each UE 115 transmits to every other UE 115 in the group. In some examples, a base station 105 facilitates the scheduling of resources for D2D communications. In other cases, D2D communications are carried out between the UEs 115 without the involvement of a base station 105.

In some systems, the D2D communication link 135 may be an example of a communication channel, such as a sidelink communication channel, between vehicles (e.g., UEs 115). In some examples, vehicles may communicate using vehicle-to-everything (V2X) communications, vehicle-to-vehicle (V2V) communications, or some combination of these. A vehicle may signal information related to traffic conditions, signal scheduling, weather, safety, emergencies, or any other information relevant to a V2X system. In some examples, vehicles in a V2X system may communicate with roadside infrastructure, such as roadside units, or with the network via one or more network nodes (e.g., base stations 105) using vehicle-to-network (V2N) communications, or with both.

The core network 130 may provide user authentication, access authorization, tracking, Internet Protocol (IP) connectivity, and other access, routing, or mobility functions. The core network 130 may be an evolved packet core (EPC) or 5G core (5GC), which may include at least one control plane entity that manages access and mobility (e.g., a mobility management entity (MME), an access and mobility management function (AMF)) and at least one user plane entity that routes packets or interconnects to external networks (e.g., a serving gateway (S-GW), a Packet Data Network (PDN) gateway (P-GW), or a user plane function (UPF)). The control plane entity may manage non-access stratum (NAS) functions such as mobility, authentication, and bearer management for the UEs 115 served by the base stations 105 associated with the core network 130. User IP packets may be transferred through the user plane entity, which may provide IP address allocation as well as other functions. The user plane entity may be connected to IP services 150 for one or more network operators. The IP services 150 may include access to the Internet, Intranet(s), an IP Multimedia Subsystem (IMS), or a Packet-Switched Streaming Service.

Some of the network devices, such as a base station 105, may include subcomponents such as an access network entity 140, which may be an example of an access node controller (ANC). Each access network entity 140 may communicate with the UEs 115 through one or more other access network transmission entities 145, which may be referred to as radio heads, smart radio heads, or transmission/reception points (TRPs). Each access network transmission entity 145 may include one or more antenna panels. In some configurations, various functions of each access network entity 140 or base station 105 may be distributed across various network devices (e.g., radio heads and ANCs) or consolidated into a single network device (e.g., a base station 105).

The wireless communications system 100 may operate using one or more frequency bands, typically in the range of 300 megahertz (MHz) to 300 gigahertz (GHz). Generally, the region from 300 MHz to 3 GHz is known as the ultra-high frequency (UHF) region or decimeter band because the wavelengths range from approximately one decimeter to one meter in length. The UHF waves may be blocked or redirected by buildings and environmental features, but the waves may penetrate structures sufficiently for a macro cell to provide service to the UEs 115 located indoors. The transmission of UHF waves may be associated with smaller antennas and shorter ranges (e.g., less than 100 kilometers) compared to transmission using the smaller frequencies and longer waves of the high frequency (HF) or very high frequency (VHF) portion of the spectrum below 300 MHz.

The wireless communications system 100 may also operate in a super high frequency (SHF) region using frequency bands from 3 GHz to 30 GHz, also known as the centimeter band, or in an extremely high frequency (EHF) region of the spectrum (e.g., from 30 GHz to 300 GHz), also known as the millimeter band. In some examples, the wireless communications system 100 may support millimeter wave (mmW) communications between the UEs 115 and the base stations 105, and EHF antennas of the respective devices may be smaller and more closely spaced than UHF antennas. In some examples, this may facilitate use of antenna arrays within a device. The propagation of EHF transmissions, however, may be subject to even greater atmospheric attenuation and shorter range than SHF or UHF transmissions. The techniques disclosed herein may be employed across transmissions that use one or more different frequency regions, and designated use of bands across these frequency regions may differ by country or regulating body.

The wireless communications system 100 may utilize both licensed and unlicensed radio frequency spectrum bands. For example, the wireless communications system 100 may employ License Assisted Access (LAA), LTE-Unlicensed (LTE-U) radio access technology, or NR technology in an unlicensed band such as the 5 GHz industrial, scientific, and medical (ISM) band. When operating in unlicensed radio frequency spectrum bands, devices such as the base stations 105 and the UEs 115 may employ carrier sensing for collision detection and avoidance. In some examples, operations in unlicensed bands may be based on a carrier aggregation configuration in conjunction with component carriers operating in a licensed band (e.g., LAA). Operations in unlicensed spectrum may include downlink transmissions, uplink transmissions, P2P transmissions, or D2D transmissions, among other examples.

A base station 105 or a UE 115 may be equipped with multiple antennas, which may be used to employ techniques such as transmit diversity, receive diversity, multiple-input multiple-output (MIMO) communications, or beamforming. The antennas of a base station 105 or a UE 115 may be located within one or more antenna arrays or antenna panels, which may support MIMO operations or transmit or receive beamforming. For example, one or more base station antennas or antenna arrays may be co-located at an antenna assembly, such as an antenna tower. In some examples, antennas or antenna arrays associated with a base station 105 may be located in diverse geographic locations. A base station 105 may have an antenna array with a number of rows and columns of antenna ports that the base station 105 may use to support beamforming of communications with a UE 115. Likewise, a UE 115 may have one or more antenna arrays that may support various MIMO or beamforming operations. Additionally or alternatively, an antenna panel may support radio frequency beamforming for a signal transmitted via an antenna port.

The base stations 105 or the UEs 115 may use MIMO communications to exploit multipath signal propagation and increase the spectral efficiency by transmitting or receiving multiple signals via different spatial layers. Such techniques may be referred to as spatial multiplexing. The multiple signals may, for example, be transmitted by the transmitting device via different antennas or different combinations of antennas. Likewise, the multiple signals may be received by the receiving device via different antennas or different combinations of antennas. Each of the multiple signals may be referred to as a separate spatial stream and may carry bits associated with the same data stream (e.g., the same codeword) or different data streams (e.g., different codewords). Different spatial layers may be associated with different antenna ports used for channel measurement and reporting. MIMO techniques include single-user MIMO (SU-MIMO), where multiple spatial layers are transmitted to the same receiving device, and multiple-user MIMO (MU-MIMO), where multiple spatial layers are transmitted to multiple devices.

Beamforming, which may also be referred to as spatial filtering, directional transmission, or directional reception, is a signal processing technique that may be used at a transmitting device or a receiving device (e.g., a base station 105, a UE 115) to shape or steer an antenna beam (e.g., a transmit beam, a receive beam) along a spatial path between the transmitting device and the receiving device. Beamforming may be achieved by combining the signals communicated via antenna elements of an antenna array such that some signals propagating at particular orientations with respect to an antenna array experience constructive interference while others experience destructive interference. The adjustment of signals communicated via the antenna elements may include a transmitting device or a receiving device applying amplitude offsets, phase offsets, or both to signals carried via the antenna elements associated with the device. The adjustments associated with each of the antenna elements may be defined by a beamforming weight set associated with a particular orientation (e.g., with respect to the antenna array of the transmitting device or receiving device, or with respect to some other orientation).

A base station 105 or a UE 115 may use beam sweeping techniques as part of beam forming operations. For example, a base station 105 may use multiple antennas or antenna arrays (e.g., antenna panels) to conduct beamforming operations for directional communications with a UE 115. Some signals (e.g., synchronization signals, reference signals, beam selection signals, or other control signals) may be transmitted by a base station 105 multiple times in different directions. For example, the base station 105 may transmit a signal according to different beamforming weight sets associated with different directions of transmission. Transmissions in different beam directions may be used to identify (e.g., by a transmitting device, such as a base station 105, or by a receiving device, such as a UE 115) a beam direction for later transmission or reception by the base station 105.

Some signals, such as data signals associated with a particular receiving device, may be transmitted by a base station 105 in a single beam direction (e.g., a direction associated with the receiving device, such as a UE 115). In some examples, the beam direction associated with transmissions along a single beam direction may be determined based on a signal that was transmitted in one or more beam directions. For example, a UE 115 may receive one or more of the signals transmitted by the base station 105 in different directions and may report to the base station 105 an indication of the signal that the UE 115 received with a highest signal quality or an otherwise acceptable signal quality.

In some examples, transmissions by a device (e.g., by a base station 105 or a UE 115) may be performed using multiple beam directions, and the device may use a combination of digital precoding or radio frequency beamforming to generate a combined beam for transmission (e.g., from a base station 105 to a UE 115). The UE 115 may report feedback that indicates precoding weights for one or more beam directions, and the feedback may correspond to a configured number of beams across a system bandwidth or one or more sub-bands. The base station 105 may transmit a reference signal (e.g., a cell-specific reference signal (CRS), a channel state information reference signal (CSI-RS)), which may be precoded or unprecoded. The UE 115 may provide feedback for beam selection, which may be a precoding matrix indicator (PMI) or codebook-based feedback (e.g., a multi-panel type codebook, a linear combination type codebook, a port selection type codebook). Although these techniques are described with reference to signals transmitted in one or more directions by a base station 105, a UE 115 may employ similar techniques for transmitting signals multiple times in different directions (e.g., for identifying a beam direction for subsequent transmission or reception by the UE 115) or for transmitting a signal in a single direction (e.g., for transmitting data to a receiving device).

A receiving device (e.g., a UE 115) may try multiple receive configurations (e.g., directional listening) when receiving various signals from the base station 105, such as synchronization signals, reference signals, beam selection signals, or other control signals. For example, a receiving device may try multiple receive directions by receiving via different antenna subarrays, by processing received signals according to different antenna subarrays, by receiving according to different receive beamforming weight sets (e.g., different directional listening weight sets) applied to signals received at multiple antenna elements of an antenna array, or by processing received signals according to different receive beamforming weight sets applied to signals received at multiple antenna elements of an antenna array, any of which may be referred to as "listening" according to different receive configurations or receive directions. In some examples, a receiving device may use a single receive configuration to receive along a single beam direction (e.g., when receiving a data signal). The single receive configuration may be aligned in a beam direction determined based on listening according to different receive configuration directions (e.g., a beam direction determined to have a highest signal strength, highest signal-to-noise ratio (SNR), or otherwise acceptable signal quality based on listening according to multiple beam directions).

The wireless communications system 100 may be a packet-based network that operates according to a layered protocol stack. In the user plane, communications at the bearer or Packet Data Convergence Protocol (PDCP) layer may be IP-based. A Radio Link Control (RLC) layer may perform packet segmentation and reassembly to communicate over logical channels. A Medium Access Control (MAC) layer may perform priority handling and multiplexing of logical channels into transport channels. The MAC layer may also use error detection techniques, error correction techniques, or both to support retransmissions at the MAC layer to improve link efficiency. In the control plane, the Radio Resource Control (RRC) protocol layer may provide establishment, configuration, and maintenance of an RRC connection between a UE 115 and a base station 105 or a core network 130 supporting radio bearers for user plane data. At the physical layer, transport channels may be mapped to physical channels.

The UEs 115 and the base stations 105 may support retransmissions of data to increase the likelihood that data is received successfully. Hybrid automatic repeat request (HARQ) feedback is one technique for increasing the likelihood that data is received correctly over a communication link 125. HARQ may include a combination of error detection (e.g., using a cyclic redundancy check (CRC)), forward error correction (FEC), and retransmission (e.g., automatic repeat request (ARQ)). HARQ may improve throughput at the MAC layer in poor radio conditions (e.g., low signal-to-noise conditions). In some examples, a device may support same-slot HARQ feedback, where the device may provide HARQ feedback in a specific slot for data received in a previous symbol in the slot. In other cases, the device may provide HARQ feedback in a subsequent slot, or according to some other time interval.

The wireless communications system 100 may support UEs 115 that transition to an inactive state after periods of low data activity. In an inactive state, the UE 115 may not monitor or use various data channels for a set of cells, which may result in reduced power consumption, among other benefits. While in an inactive state, a UE 115 may monitor various channel conditions associated with cells in accordance with a cell reselection procedure. In some cases, this procedure may result in the UE 115 reselecting to a neighboring cell when a cell configured at the UE 115 may support communications. When a UE 115 reselects to a new cell, the UE 115 may consume processing, power, and memory resources.

Techniques described herein support prioritization of configured cells for evaluating the cells as a part of the cell reselection procedure while in an inactive state. As the UE 115 evaluates the cells while in an inactive state, the UE 115 may prioritize selection of a cell of an MCG or a SCG before neighboring cells such as to reduce the probability of selection of a new cell. This technique may result efficient use of processing, power, and memory resources by a UE 115 by avoiding or reducing new cell selection.

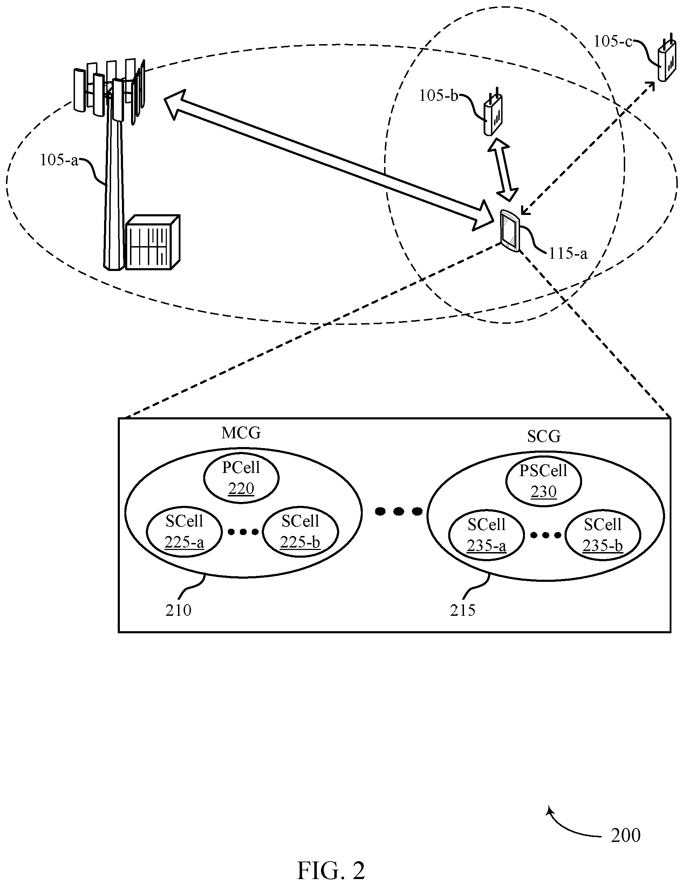

**FIG. 2** illustrates an example of a wireless communications system 200 supporting aspects of the present disclosure. In some examples, wireless communications system 200 may implement aspects of wireless communications system 100. The wireless communications system 200 includes base station 105-a, base station 105-b, base station 105-c, and UE 115-a, which may be examples of the corresponding devices of FIG. 1. Base station 105-a may support communications with various UEs 115 in a coverage area, and base station 105-b may support communications with various UEs 115 in a coverage area. In some cases, base station 105-a may support communications with UEs 115 using a first RAT, such as LTE, while base station 105-b may support communications with UEs 115 using a second RAT, such as 5G (e.g., dual-connectivity).

One of the base stations 105, such as base station 105-a, may configure the UE 115 with various cells that may be used to communication with network. For example, the base station 105-a may configure the UE 115-a with cells that are associated with neighboring base stations 105. As such, when the UE 115-a moves about a geographic area, the UE 115 may use the configuration for the neighboring cells to efficiently establish or maintain a connection with the network. In some examples, the UE 115 may communicate with the network using multiple cells or carriers, which may be referred to as dual-connectivity or carrier aggregation. In a dual-connectivity scenario, a UE 115 may communicate with a master base station 105 and a secondary base station 105. The master base station 105 may be associated with an MCG 210, and a secondary base station 105 may be associated with a SCG 215. The master base station 105 may configure the UE 115 with information associated with the master base station 105 and the secondary base station 105. In some cases, the MCG 210 and the SCG 215 may be associated with a same base station 105-a. For example, base station 105-a may support a master node (MN) associated with the MCG 210 and one or more secondary node (SN) that are associated with the SCG 215. The master node and the secondary nodes may be physically or logically separate components of the base station 105-a.

As illustrated in FIG. 2, the base station 105-a may be an example of a master base station, and the base station 105-b may be an example of a secondary base station. The master base station 105-a may configure the UE 115-a with an MCG 210 and a SCG 215. For example, the base station 105-a may configure the UE 115-a with the MCG 210 and the SCG 215 using one or more system information block (SIB) messages. The MCG 210 includes a PCell 220 and one or more SCells 225. The SCG 215 includes a PSCell 230 and one or more SCells 235. The UE 115-a may maintain a communication link with the base station 105-a using one or more cells of the MCG 210. Further, the UE 115-a may maintain a communication link with the secondary base station 105-b using one or more cells of the SCG 215. However, if the UE 115 maintains an active link, meaning that the UE 115-a transmits and monitors for receipt of shared channel messages (physical uplink shared channel (PUSCH) messages and physical downlink shared channel (PDSCH) messages), then the UE 115-a may utilize significant resources, such as processing, memory, and power resources.

The wireless communications system 100 may support inactive states by UEs 115, such as UE 115-a. When the UE 115-a is inactive or has low data transmission for a period of time, then the UE 115-a may enter an inactive state (e.g., radio resource control (RRC) connected inactive state). When the UE 115-a enters the inactive state, the UE 115-a may store a UE context. In inactive state, the connection between the radio access network (RAN) (e.g., base station 105-a and base station 105-b) and the core network (CN) is kept active to reduce or minimize control plane latency and UE power consumption during state transition. Further, while in an inactive state, the UE may maintain a connection with the network via the serving cell (e.g., base station 105-a). The UE 115-a may evaluate the serving cell while in the inactive state. Evaluating the serving cell may include determining a priority, radio link quality, and cell accessibility of the serving cell. For example, the UE 115-a may determine whether a reference signal received power (RSRP) of the serving cell is greater than a threshold as follows: *SrxLev > SnonIntraSearchP,* where *Srxlev* corresponds to the cell selection receive (Rx) level value measured by the UE 115-a, and *SnonIntraSearchP* is the threshold. The UE 115-a may also evaluate whether serving cell quality satisfies a threshold as follows: *Squal > SnonIntraSearchQ,* wherein *Squal* is the measured cell quality and *SnonIntraSearchQ* is a cell quality threshold. If both thresholds are not satisfied, then the UE 115-a may choose to perform measurements of other cells, such as inter-frequency cells and inter-rat frequency cells of equal or lower priorities, which may be referred to neighboring cells herein and may be associated with base station 105-c. These evaluations and measurements may be referred to as a cell reselection procedure.

Based on satisfaction of criteria (e.g., the serving cell not satisfying the thresholds), the UE 115-a may move (e.g., "reselect") to another inter-frequency or inter-RAT cell. For example, a cell of a higher priority radio access technology (RAT) or frequency that fulfils *Srxlev > ThreshX, HighP* during a time interval, *TreselectionRAT,* may be used to establish a connection. Further, a cell of higher priority NR or EUTRAN RAT/frequency fulfils *Squal > ThreshX, HighQ* during a time interval, *TreselectionRAT,* may be used to establish a connection. As such, if the UE 115-a is an RRC inactive state and the criteria is satisfied, then the UE 115-a may move to a neighboring cell (e.g., base station 105-c) and perform the reselection procedure in the new cell.

According to the cell reselection process, if the UE 115-a is an RRC connected state with the MCG 210 and the SCG 215 configured, and the UE 115-a moves to the RRC inactive state due to low data activity, the UE 115-a may store the context (e.g., configuration information) associated with the MCG 210 and the SCG 215. As described above, the UE 115-a may check the priority and evaluate whether the *Srxlev*/*Squal* of other RAT or frequency cells satisfy the criteria and moves to the other cells upon satisfaction of the criterion. Thus, if the UE 115-a has a low mobility, the UE 115-a may not consider the MCG and SCG cells that are stored and may only consider the neighboring cells (e.g., base station 105-c). More particularly, if the UE 115-a starts data transfer (e.g., transitions from inactive to active) and it has moved to another cell, then the UE 115-a may not be able to resume to the same MCG 210 and the SCG 215 (e.g., that are configured at the UE 115-a), even if the UE 115-a is within the same or a similar vicinity. Because the UE 115-a may reselect to the unconfigured cell, the UE 115-a may utilize processing and power resources by establishing a connection in a new neighboring cell, when a cell of the MCG 210 or the SCG 215 may be adequate for communications.

Techniques described herein support avoidance or limiting UEs 115 making unnecessary transitions and improving throughput. According to one technique, the UE 115-a may prioritize MCG and SCG cells over cells that are configured in received system information (e.g., a SIB), such as a neighboring cell (e.g., base station 105-c). As such, when the UE 115-a transitions to the inactive state, the UE 115-a may maintain a context or database that contains the information associated with the serving cell (e.g., base station 105-a) with the MCG 210 and the SCG 215 in addition to other cells that are present are present as part of a SIB information. The UE 115-a may give priority to the MCG 210 and the SCG 215 compared to other neighboring cells when evaluating for cell reselection.

According to this technique, when the UE 115-a moves to the inactive state, the UE 115-a may prioritize searching for cells in the MCG 210 and the SCG 215, then to other 5G cells (e.g., inter-frequency cells), then to inter-radio access technology (IRAT) cells. As such, the UE 115-a may attempt to move or reselect to cells that are present within the MCG 210 or the SCG 215. That is, the UE 115-a may move to cells that are configured at the UE 115-a, such that the UE 115-a may efficiently establish a connection. According to this technique, the priority may be identified by the UE 115-a as follows: Serving cell > MCG & SCG cells > Other NR cells > Other IRAT Cells.

According to another technique, the UE 115-a may increase the evaluation periodicity (e.g., search and measurement periodicity) of cells associated with a RAT. For example, if the UE 115-a is in an inactive state and identified NR cells (e.g., neighboring cells) other than MCG 210 and SCG 215 cells, the UE 115-a may reduce the search and measurement periodicity for the neighboring cells and/or increase the search and measurement periodicity for the MCG and SCG cells (e.g., search and measure MCG and SCG cells more often, and search and measure neighbor cells less often). As such, the UE 115-a may implicitly prioritize the MCG 210 and the SCG cells and avoid or limit the movement to the neighboring cells.

According to the cell reselection procedure, if the UE 115-a detects a 5G cell and identifies that the *Srxlev > ThreshX* criteria is satisfied, then the UE 115-a may start a reselection timer (e.g., *Tresel* timer). This timer may define the time duration for which a neighboring cell is to satisfy the reselection criterion (e.g., be better ranked than the serving cell), before the neighboring cell can be selected for reselection. According to another technique herein, the UE 115-a may not initiate the timer if *Srxlev > ThreshX.* Rather, the UE 115-a may start the timer if the neighboring cell satisfies the threshold with an offset (e.g., + x db.). That is, the criteria or threshold is increased by some offset (or the measured *Srxlev* is reduced by the offset). For example, if the UE 115-a is to start the timer if the measured value is higher than 30 db. According to this technique, this threshold (e.g., 30 db.) may be increased by 3 db. As such, the UE 115-a may evaluate whether the measurement is greater than 33 db. for neighboring cells, or cells that are not part of the MCG 210 or the SCG 215, which results in the cells of the MCG 210 or SCG 215 having a greater probability of being selected. That is, the x db. offset may be applicable to cells that are present in the SIB database.

In accordance with another technique herein, the UE 115-a may monitor and store data corresponding to time periods that the UE 115-a is in the inactive state and active state (e.g., keep track of and store historical data on state transitions). This data may support the UE 115-a identifying the frequency of transitioning from the inactive to the active state and from the active state to the inactive state. Using this data, the UE 115-a may implement procedures to avoid or reduce reselection to neighboring cells. For example, if the UE 115-a has bursty data and transitions frequently between the active state (e.g., connected mode) and the inactive state, then the UE 115-a may start a timer (T1) to delay reselection to neighboring cells other than the MCG 210 and the SCG 215 cells. While the timer is active, the UE 115-b may not reselect to the other cells. If the timer expires and the UE 115-a is still in the inactive state, then the UE 115-a may evaluate the neighboring cells in addition to the MCG 210 and the SCG 215 cells. If the timer is running and the RSRP of the serving cell is low, then the UE 115-a may exit the timer and evaluate the neighboring cells, SCG 215 cells, and the MCG 210 cells. If the transitions of the UE 115-a are infrequent or normal, then the UE may evaluate the SCG 215 and MCG 210 cells in addition to the neighboring cells according to the cell reselection procedure.

Using these techniques, the UE 115-a may save power as frequent transitions may be avoided or reduced. Further, the user experience may be enhanced due to reduced data interruptions. Further, inactive to connected transitions may be faster or more efficient due to cells that are configured at the UE 115-a being used more often. These described techniques may be implemented when criteria is satisfied. For example, if the UE 115-a experiences low data throughputs due to *N* (e.g., 3) state transitions (e.g., INACTIVE to CONNECTED) within a timer *M,* the UE 115-a may use the described techniques for cell reselection and prioritization. In some cases, the UE 115-a may enter a panic mode, in which the UE 115-a may evaluate cells without using the offset or prioritizing the MCG 210 or the SCG 215 cells. That is, when the UE 115-a is in panic mode, it may not utilize the described techniques to prioritize the MCG 210 and the SCG 215 cells.

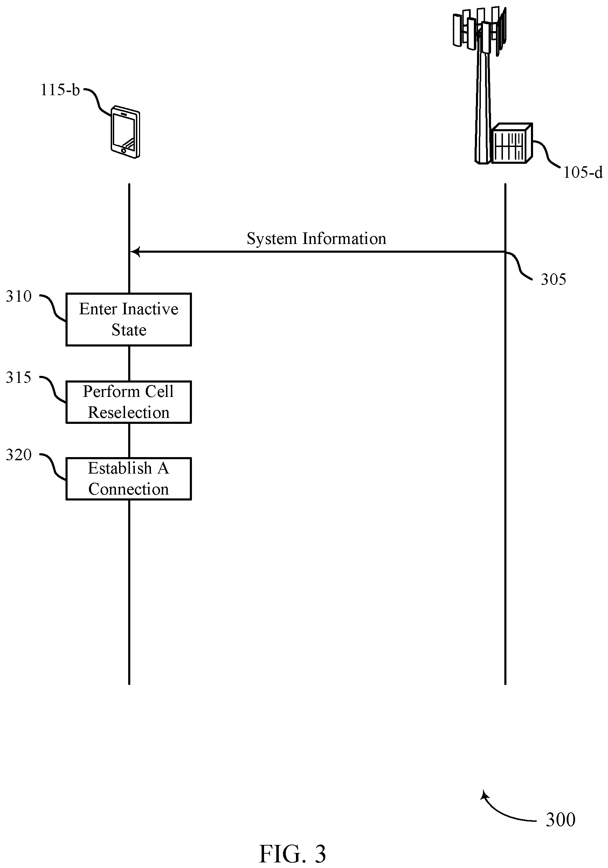

**FIG. 3** illustrates an example of a process flow diagram supporting aspects of the present disclosure. In some examples, the process flow diagram 300 may implement aspects of wireless communications system 100 and 200. The process flow diagram 300 includes a base station 105-d and a UE 115-b, which may be examples of the corresponding devices described with respect to FIGs. 1 and 2.

At 305, the UE 115-b may receive, from the base station 105-d, system information that indicates a cell reselection priority for evaluating each cell of a plurality of cells including a neighboring cell, an MCG cell, and a SCG cell. The cell reselection priority may indicate that the neighboring cell is assigned a higher priority than the MCG cell, the SCG cell, or both, that are configured at the UE 115-b. For example, the MCG and the SCG may be configured at the UE 115-b for dual connectivity services. The system information (e.g., received in a SIB) may indicate that neighboring cells have a higher priority of the cells of the MCG/SCG for cell reselection evaluation.

At 310, the UE may determine to enter an inactive state. This determination may be based on a period of low data activity. Upon entering the inactive state, the UE 115-a may store information associated with the MCG and SCG (e.g., contextual information). This information may be used to efficiently resume activity within a cell of the MCG and the SCG.

At 315, the UE 115-b may perform a cell reselection procedure that prioritizes reselection of the MCG cell, the SCG cell, or both, over the neighboring cell. To prioritize reselection of the MCG cell or the SCG cell, the UE 115-b may assign higher priorities to the MCG cells or SCG cells than was indicated in the SIB or may assign lower priorities to the neighboring cells that was indicated in the SIB. Another prioritization technique may include increasing the evaluation (e.g., search and measurement) periodicity for the MCG and SCG cells and/or reducing the evaluation periodicity of the neighboring cells. Another technique may include evaluating the neighboring cells with an offset applied to the threshold for the neighboring cells, such that the neighboring cells are to meet a higher power level threshold or quality threshold for selection. According to another technique, the UE 115-b may implement a timer based on inactive state transition activity, and while the timer is active, the UE 115-b may not reselect or evaluate the neighboring cells. The UE 115-b may use one or more of these techniques in performing the cell reselection procedure. In some cases, the UE 115-b may enter a panic mode and perform the cell resection without prioritizing the MCG and SCG cell.

At 320 the UE 115-b may establish, after the UE transitions from an inactive state to an active state, a connection with a first cell of the plurality of cells based at least in part on the cell reselection procedure. In some cases, the UE may resume activity within the serving cell implemented by base station 105-d or resume activity within an MCG cell or SCG cell implemented by base station 105-d to establish the connection. In some examples, the UE 115-b may establish a connection with a neighboring cell based on a result of the cell reselection procedure.

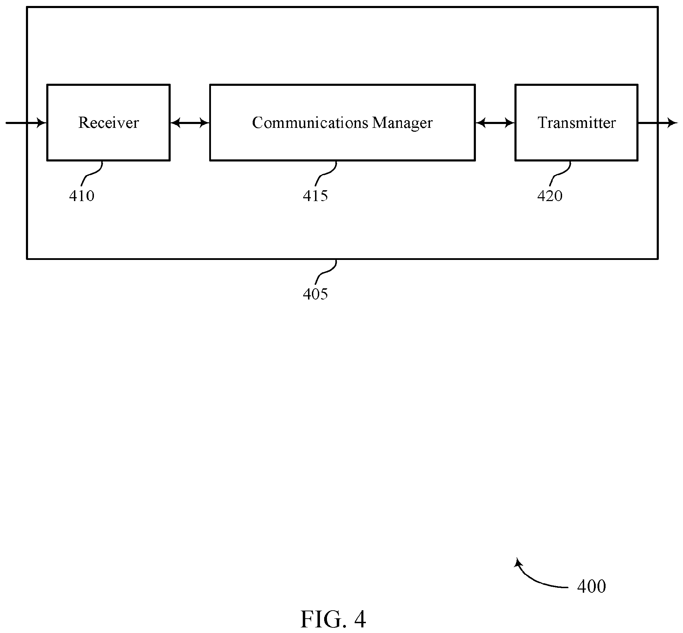

**FIG. 4** shows a block diagram 400 of a device 405 in accordance with aspects of the present disclosure. The device 405 may be an example of aspects of a UE 115 as described herein. The device 405 may include a receiver 410, a communications manager 415, and a transmitter 420. The device 405 may also include a processor. Each of these components may be in communication with one another (e.g., via one or more buses).

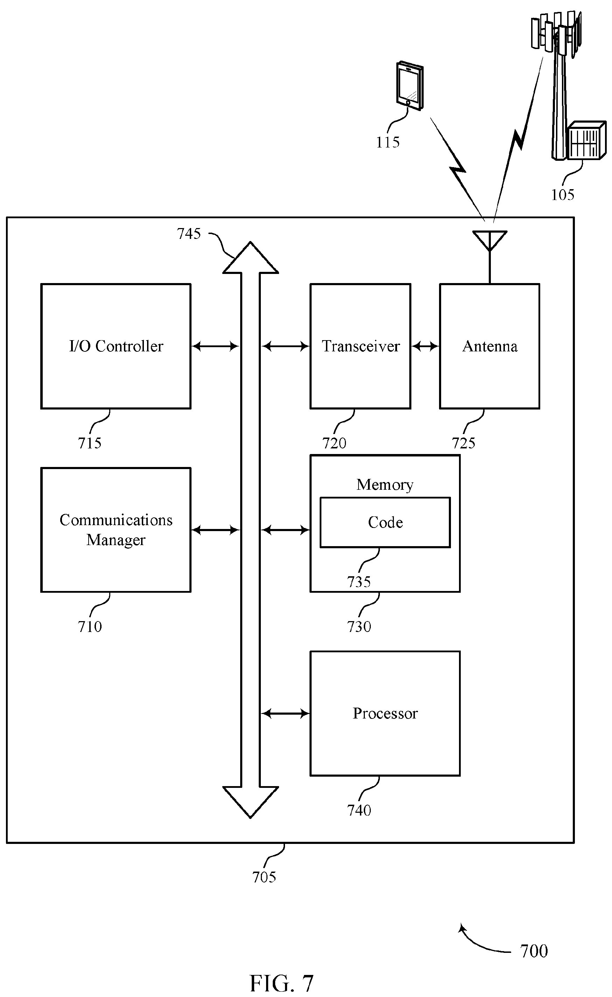

The receiver 410 may receive information such as packets, user data, or control information associated with various information channels (e.g., control channels, data channels, and information related to novel methods to prioritize MCG and SCG cells over cells configured by network neighbor, etc.). Information may be passed on to other components of the device 405. The receiver 410 may be an example of aspects of the transceiver 720 described with reference to FIG. 7. The receiver 410 may utilize a single antenna or a set of antennas.

The communications manager 415 may receive, from a base station, system information that indicates a cell reselection priority for evaluating each cell of a set of cells including a neighboring cell, a MCG cell, and a SCG cell, the cell reselection priority indicating that the neighboring cell is assigned a higher priority than the MCG cell, the SCG cell, or both, configured at the UE, perform a cell reselection procedure that prioritizes reselection of the MCG cell, the SCG cell, or both, over the neighboring cell, and establish, after the UE transitions from an inactive state to an active state, a connection with a first cell of the set of cells based on the cell reselection procedure. The communications manager 415 may be an example of aspects of the communications manager 710 described herein.

The communications manager 415, or its sub-components, may be implemented in hardware, code (e.g., software or firmware) executed by a processor, or any combination thereof. If implemented in code executed by a processor, the functions of the communications manager 415, or its sub-components may be executed by a general-purpose processor, a DSP, an application-specific integrated circuit (ASIC), an FPGA or other programmable logic device, discrete gate or transistor logic, discrete hardware components, or any combination thereof designed to perform the functions described in the present disclosure.

The communications manager 415, or its sub-components, may be physically located at various positions, including being distributed such that portions of functions are implemented at different physical locations by one or more physical components. In some examples, the communications manager 415, or its sub-components, may be a separate and distinct component in accordance with various aspects of the present disclosure. In some examples, the communications manager 415, or its sub-components, may be combined with one or more other hardware components, including but not limited to an input/output (I/O) component, a transceiver, a network server, another computing device, one or more other components described in the present disclosure, or a combination thereof in accordance with various aspects of the present disclosure.

The transmitter 420 may transmit signals generated by other components of the device 405. In some examples, the transmitter 420 may be collocated with a receiver 410 in a transceiver module. For example, the transmitter 420 may be an example of aspects of the transceiver 720 described with reference to FIG. 7. The transmitter 420 may utilize a single antenna or a set of antennas.

In some examples, the communications manager 415 may be implemented as an integrated circuit or chipset for a mobile device modem, and the receiver 410 and transmitter 420 may be implemented as analog components (e.g., amplifiers, filters, antennas) coupled with the mobile device modem to enable wireless transmission and reception over one or more bands.

The communications manager 415 as described herein may be implemented to realize one or more potential advantages. One implementation may allow the device 405 to more efficiently enter an active state from an inactive state, and more specifically to prioritize MCG or SCG cells for cell reselection. For example, the device 40₅ may select an MCG or SCG cell before a neighboring cell, which may support efficient active state transition and cell selection.

Based on implementing the feedback mechanism techniques as described herein, a processor of a UE 115 (e.g., controlling the receiver 410, the transmitter 420, or the transceiver 1120 as described with reference to FIG. 7) may increase reliability and decrease signaling overhead in active state transition because the configured MCG and SCG cells may be selected for establishing a connection instead of an unconfigured neighboring cell.

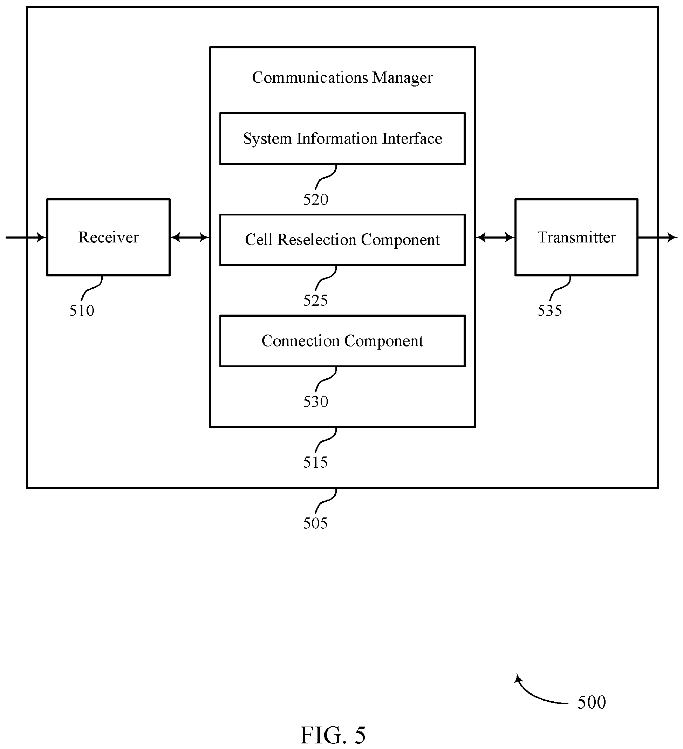

**FIG. 5** shows a block diagram 500 of a device 505 in accordance with aspects of the present disclosure. The device 505 may be an example of aspects of a device 405, or a UE 115 as described herein. The device 505 may include a receiver 510, a communications manager 515, and a transmitter 535. The device 505 may also include a processor. Each of these components may be in communication with one another (e.g., via one or more buses).

The receiver 510 may receive information such as packets, user data, or control information associated with various information channels (e.g., control channels, data channels, and information related to novel methods to prioritize MCG and SCG cells over cells configured by network neighbor, etc.). Information may be passed on to other components of the device 505. The receiver 510 may be an example of aspects of the transceiver 720 described with reference to FIG. 7. The receiver 510 may utilize a single antenna or a set of antennas.

The communications manager 515 may be an example of aspects of the communications manager 415 as described herein. The communications manager 515 may include a system information interface 520, a cell reselection component 525, and a connection component 530. The communications manager 515 may be an example of aspects of the communications manager 710 described herein.

The system information interface 520 may receive, from a base station, system information that indicates a cell reselection priority for evaluating each cell of a set of cells including a neighboring cell, a MCG cell, and a SCG cell, the cell reselection priority indicating that the neighboring cell is assigned a higher priority than the MCG cell, the SCG cell, or both, configured at the UE.

The cell reselection component 525 may perform a cell reselection procedure that prioritizes reselection of the MCG cell, the SCG cell, or both, over the neighboring cell.

The connection component 530 may establish, after the UE transitions from an inactive state to an active state, a connection with a first cell of the set of cells based on the cell reselection procedure.

The transmitter 535 may transmit signals generated by other components of the device 505. In some examples, the transmitter 535 may be collocated with a receiver 510 in a transceiver module. For example, the transmitter 535 may be an example of aspects of the transceiver 720 described with reference to FIG. 7. The transmitter 535 may utilize a single antenna or a set of antennas.

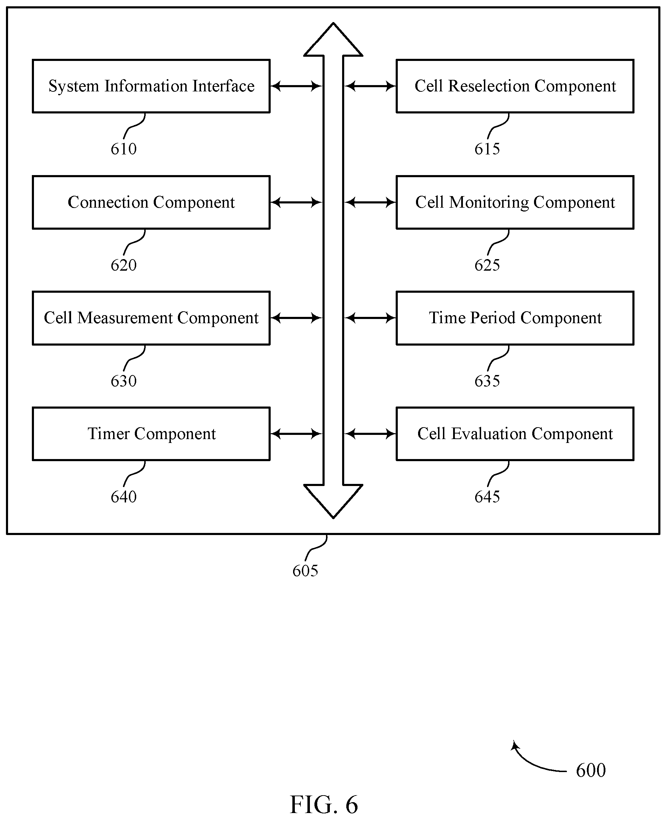

**FIG. 6** shows a block diagram 600 of a communications manager 605 supporting aspects of the present disclosure. The communications manager 605 may be an example of aspects of a communications manager 415, a communications manager 515, or a communications manager 710 described herein. The communications manager 605 may include a system information interface 610, a cell reselection component 615, a connection component 620, a cell monitoring component 625, a cell measurement component 630, a time period component 635, a timer component 640, and a cell evaluation component 645. Each of these modules may communicate, directly or indirectly, with one another (e.g., via one or more buses).

The system information interface 610 may receive, from a base station, system information that indicates a cell reselection priority for evaluating each cell of a set of cells including a neighboring cell, a MCG cell, and a SCG cell, the cell reselection priority indicating that the neighboring cell is assigned a higher priority than the MCG cell, the SCG cell, or both, configured at the UE.

The cell reselection component 615 may perform a cell reselection procedure that prioritizes reselection of the MCG cell, the SCG cell, or both, over the neighboring cell. The connection component 620 may establish, after the UE transitions from an inactive state to an active state, a connection with a first cell of the set of cells based on the cell reselection procedure.

In some examples, the connection component 620 may establish the connection with the first cell that is the MCG cell or the SCG cell using a configuration of the MCG cell or the SCG cell that is configured prior to transitioning from the active state to the inactive state.

In some examples, the connection component 620 may determine that the neighboring cell is associated with a different frequency than the MCG cell and the SCG cell, a different radio access technology than the MCG cell and the SCG cell, or both.

In some cases, the first threshold corresponds to a higher signal level than the second threshold. The cell monitoring component 625 may monitor the MCG cell or the SCG cell in accordance with a first periodicity that is shorter in time than a second periodicity at which the UE monitors for the neighboring cell.

The cell measurement component 630 may perform a measurement of a first signal of the MCG cell or the SCG cell according to the first periodicity. In some examples, the cell measurement component 630 may perform a measurement of a second signal of the neighboring cell according to the second periodicity.

The time period component 635 may establish the connection with the first cell that is the neighboring cell within a time period based on a signal of the neighboring cell satisfying a first threshold that is offset relative to a second threshold monitored for establishing connectivity with the MCG cell, the SCG cell, or both.

The timer component 640 may initiate a timer in response to transitioning to the inactive state. In some examples, the timer component 640 may determine a duration of the timer based on frequency of transitioning from the active state to the inactive state during a time period.

The cell evaluation component 645 may evaluate the MCG cell and the SCG cell before expiration of the timer. In some examples, the cell evaluation component 645 may evaluate the neighboring cell after expiration of the timer.

In some examples, the cell evaluation component 645 may evaluate one or more cells of the set of cells in accordance with the cell reselection priority indicated in the system information based on the UE being in a panic mode.

In some examples, the cell evaluation component 645 may determine an evaluation order indicating an order in which to evaluate the set of cells based on assigning a higher priority to the MCG cell, the SCG cell, or both, than the neighboring cell. In some examples, the cell evaluation component 645 may evaluate one or more cells of the set of cells in accordance with the evaluation order.

**FIG. 7** shows a diagram of a system 700 including a device 705 in accordance with aspects of the present disclosure. The device 705 may be an example of or include the components of device 405, device 505, or a UE 115 as described herein. The device 705 may include components for bi-directional voice and data communications including components for transmitting and receiving communications, including a communications manager 710, an I/O controller 715, a transceiver 720, an antenna 725, memory 730, and a processor 740. These components may be in electronic communication via one or more buses (e.g., bus 745).

The communications manager 710 may receive, from a base station, system information that indicates a cell reselection priority for evaluating each cell of a set of cells including a neighboring cell, a MCG cell, and a SCG cell, the cell reselection priority indicating that the neighboring cell is assigned a higher priority than the MCG cell, the SCG cell, or both, configured at the UE, perform a cell reselection procedure that prioritizes reselection of the MCG cell, the SCG cell, or both, over the neighboring cell, and establish, after the UE transitions from an inactive state to an active state, a connection with a first cell of the set of cells based on the cell reselection procedure.

The I/O controller 715 may manage input and output signals for the device 705. The I/O controller 715 may also manage peripherals not integrated into the device 705. In some cases, the I/O controller 715 may represent a physical connection or port to an external peripheral. In some cases, the I/O controller 715 may utilize an operating system such as iOS^{®}, ANDROID^{®}, MS-DOS^{®}, MS-WINDOWS^{®}, OS/2^{®}, UNIX^{®}, LINUX^{®}, or another known operating system. In other cases, the I/O controller 715 may represent or interact with a modem, a keyboard, a mouse, a touchscreen, or a similar device. In some cases, the I/O controller 715 may be implemented as part of a processor. In some cases, a user may interact with the device 705 via the I/O controller 715 or via hardware components controlled by the I/O controller 715.

The transceiver 720 may communicate bi-directionally, via one or more antennas, wired, or wireless links as described above. For example, the transceiver 720 may represent a wireless transceiver and may communicate bi-directionally with another wireless transceiver. The transceiver 720 may also include a modem to modulate the packets and provide the modulated packets to the antennas for transmission, and to demodulate packets received from the antennas.

In some cases, the wireless device may include a single antenna 725. However, in some cases the device may have more than one antenna 725, which may be capable of concurrently transmitting or receiving multiple wireless transmissions.

The memory 730 may include RAM and ROM. The memory 730 may store computer-readable, computer-executable code 735 including instructions that, when executed, cause the processor to perform various functions described herein. In some cases, the memory 730 may contain, among other things, a basic input/output system (BIOS) which may control basic hardware or software operation such as the interaction with peripheral components or devices.

The processor 740 may include an intelligent hardware device, (e.g., a general-purpose processor, a digital signal processor (DSP), a CPU, a microcontroller, an ASIC, a field programmable gate array (FPGA), a programmable logic device, a discrete gate or transistor logic component, a discrete hardware component, or any combination thereof). In some cases, the processor 740 may be configured to operate a memory array using a memory controller. In other cases, a memory controller may be integrated into the processor 740. The processor 740 may be configured to execute computer-readable instructions stored in a memory (e.g., the memory 730) to cause the device 705 to perform various functions (e.g., functions or tasks supporting novel methods to prioritize MCG and SCG cells over cells configured by network neighbor).

The code 735 may include instructions to implement aspects of the present disclosure, including instructions to support wireless communications. The code 735 may be stored in a non-transitory computer-readable medium such as system memory or other type of memory. In some cases, the code 735 may not be directly executable by the processor 740 but may cause a computer (e.g., when compiled and executed) to perform functions described herein.

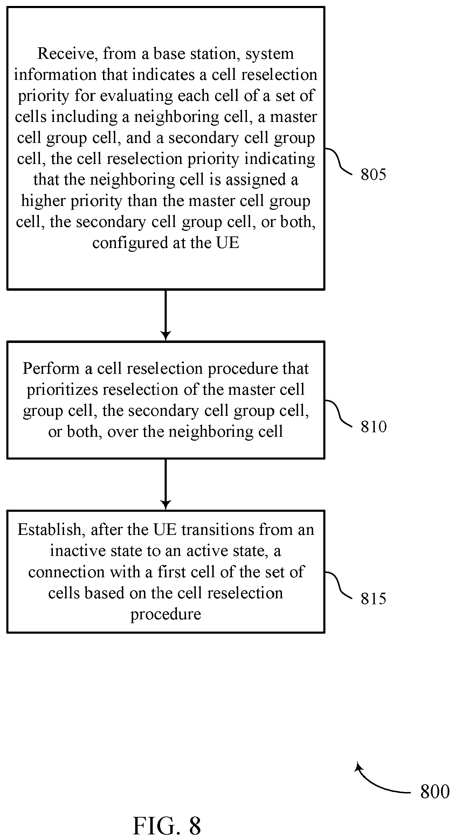

**FIG. 8** shows a flowchart illustrating a method 800 in accordance with aspects of the present disclosure. The operations of method 800 may be implemented by a UE 115 or its components as described herein. For example, the operations of method 800 may be performed by a communications manager as described with reference to FIGs. 4 through 7. In some examples, a UE may execute a set of instructions to control the functional elements of the UE to perform the functions described below. Additionally or alternatively, a UE may perform aspects of the functions described below using special-purpose hardware.

At 805, the UE may receive, from a base station, system information that indicates a cell reselection priority for evaluating each cell of a set of cells including a neighboring cell, a MCG cell, and a SCG cell, the cell reselection priority indicating that the neighboring cell is assigned a higher priority than the MCG cell, the SCG cell, or both, configured at the UE. The operations of 805 may be performed according to the methods described herein. In some examples, aspects of the operations of 805 may be performed by a system information interface as described with reference to FIGs. 4 through 7.

At 810, the UE may perform a cell reselection procedure that prioritizes reselection of the MCG cell, the SCG cell, or both, over the neighboring cell. The operations of 810 may be performed according to the methods described herein. In some examples, aspects of the operations of 810 may be performed by a cell reselection component as described with reference to FIGs. 4 through 7.

At 815, the UE may establish, after the UE transitions from an inactive state to an active state, a connection with a first cell of the set of cells based on the cell reselection procedure. The operations of 815 may be performed according to the methods described herein. In some examples, aspects of the operations of 815 may be performed by a connection component as described with reference to FIGs. 4 through 7.

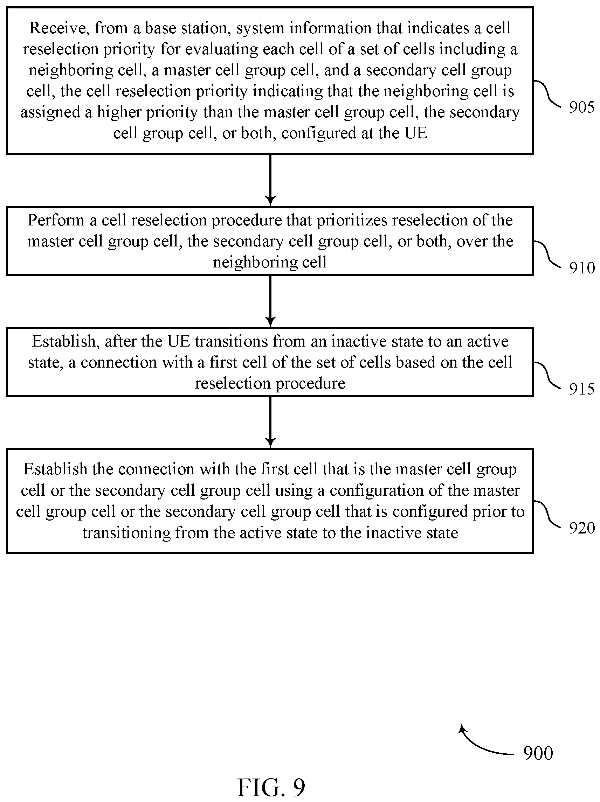

**FIG. 9** shows a flowchart illustrating a method 900 in accordance with aspects of the present disclosure. The operations of method 900 may be implemented by a UE 115 or its components as described herein. For example, the operations of method 900 may be performed by a communications manager as described with reference to FIGs. 4 through 7. In some examples, a UE may execute a set of instructions to control the functional elements of the UE to perform the functions described below. Additionally or alternatively, a UE may perform aspects of the functions described below using special-purpose hardware.

At 905, the UE may receive, from a base station, system information that indicates a cell reselection priority for evaluating each cell of a set of cells including a neighboring cell, a MCG cell, and a SCG cell, the cell reselection priority indicating that the neighboring cell is assigned a higher priority than the MCG cell, the SCG cell, or both, configured at the UE. The operations of 905 may be performed according to the methods described herein. In some examples, aspects of the operations of 905 may be performed by a system information interface as described with reference to FIGs. 4 through 7.

At 910, the UE may perform a cell reselection procedure that prioritizes reselection of the MCG cell, the SCG cell, or both, over the neighboring cell. The operations of 910 may be performed according to the methods described herein. In some examples, aspects of the operations of 910 may be performed by a cell reselection component as described with reference to FIGs. 4 through 7.

At 915, the UE may establish, after the UE transitions from an inactive state to an active state, a connection with a first cell of the set of cells based on the cell reselection procedure. The operations of 915 may be performed according to the methods described herein. In some examples, aspects of the operations of 915 may be performed by a connection component as described with reference to FIGs. 4 through 7.

At 920, the UE may establish the connection with the first cell that is the MCG cell or the SCG cell using a configuration of the MCG cell or the SCG cell that is configured prior to transitioning from the active state to the inactive state. The operations of 920 may be performed according to the methods described herein. In some examples, aspects of the operations of 920 may be performed by a connection component as described with reference to FIGs. 4 through 7.

It should be noted that the methods described herein describe possible implementations, and that the operations and the steps may be rearranged or otherwise modified and that other implementations are possible. Further, aspects from two or more of the methods may be combined.

Although aspects of an LTE, LTE-A, LTE-A Pro, or NR system may be described for purposes of example, and LTE, LTE-A, LTE-A Pro, or NR terminology may be used in much of the description, the techniques described herein are applicable beyond LTE, LTE-A, LTE-A Pro, or NR networks. For example, the described techniques may be applicable to various other wireless communications systems such as Ultra Mobile Broadband (UMB), Institute of Electrical and Electronics Engineers (IEEE) 802.11 (Wi-Fi), IEEE 802.16 (WiMAX), IEEE 802.20, Flash-OFDM, as well as other systems and radio technologies not explicitly mentioned herein.

Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The various illustrative blocks and components described in connection with the disclosure herein may be implemented or performed with a general-purpose processor, a DSP, an ASIC, a CPU, an FPGA or other programmable logic device, discrete gate or transistor logic, discrete hardware components, or any combination thereof designed to perform the functions described herein. A general-purpose processor may be a microprocessor, but in the alternative, the processor may be any processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein may be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that may be accessed by a general-purpose or special-purpose computer. By way of example, and not limitation, non-transitory computer-readable media may include random-access memory (RAM), read-only memory (ROM), electrically erasable programmable ROM (EEPROM), flash memory, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of computer-readable medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of") indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on."

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label, or other subsequent reference label.

The description set forth herein, in connection with the appended drawings, describes example configurations and does not represent all the examples that may be implemented or that are within the scope of the claims. The term "example" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, known structures and devices are shown in block diagram form in order to avoid obscuring the concepts of the described examples.

## Claims

1. A method (800) for wireless communication at a user equipment, UE, comprising:
receiving (805), from a base station (105), system information that indicates a cell reselection priority for evaluating each cell of a plurality of cells including a neighboring cell, a master cell group cell, and a secondary cell group cell, the cell reselection priority indicating that the neighboring cell is assigned a higher priority than the master cell group cell, the secondary cell group cell, or both, configured at the UE (115);
performing (810) a cell reselection procedure that prioritizes reselection of the master cell group cell, the secondary cell group cell, or both, over the neighboring cell; and
establishing (815), after the UE transitions from an inactive state to an active state, a connection with a first cell of the plurality of cells based at least in part on the cell reselection procedure.

2. The method (800) of claim 1, wherein establishing the connection with the first cell comprises:
establishing the connection with the first cell that is the master cell group cell or the secondary cell group cell using a configuration of the master cell group cell or the secondary cell group cell that is configured prior to transitioning from the active state to the inactive state.

3. The method (800) of claim 1, wherein performing the cell reselection procedure comprises:
monitoring the master cell group cell or the secondary cell group cell in accordance with a first periodicity that is shorter in time than a second periodicity at which the UE monitors for the neighboring cell.

4. The method (800) of claim 3, wherein performing the cell reselection procedure comprises:
performing a measurement of a first signal of the master cell group cell or the secondary cell group cell according to the first periodicity; and
performing a measurement of a second signal of the neighboring cell according to the second periodicity.

5. The method (800) of claim 1, wherein establishing the connection with the first cell comprises:
establishing the connection with the first cell that is the neighboring cell within a time period based at least in part on a signal of the neighboring cell satisfying a first threshold that is offset relative to a second threshold monitored for establishing connectivity with the master cell group cell, the secondary cell group cell, or both.

6. The method (800) of claim 5, wherein the first threshold corresponds to a higher signal level than the second threshold.

7. The method (800) of claim 1, further comprising:
initiating a timer in response to transitioning to the inactive state; and
evaluating the master cell group cell and the secondary cell group cell before expiration of the timer.

8. The method (800) of claim 7, further comprising:
evaluating the neighboring cell after expiration of the timer.

9. The method (800) of claim 7, further comprising:
determining a duration of the timer based at least in part on frequency of transitioning from the active state to the inactive state during a time period.

10. The method (800) of claim 1, wherein performing the cell reselection procedure comprises:
evaluating one or more cells of the plurality of cells in accordance with the cell reselection priority indicated in the system information based at least in part on the UE (115) being in a panic mode.

11. The method (800) of claim 1, wherein performing the cell reselection procedure comprises:
determining an evaluation order indicating an order in which to evaluate the plurality of cells based at least in part on assigning a higher priority to the master cell group cell, the secondary cell group cell, or both, than the neighboring cell; and
evaluating one or more cells of the plurality of cells in accordance with the evaluation order.

12. The method (800) of claim 1, further comprising:
determining that the neighboring cell is associated with a different frequency than the master cell group cell and the secondary cell group cell, a different radio access technology than the master cell group cell and the secondary cell group cell, or both.

13. An apparatus for wireless communication at a user equipment (115), UE, comprising at least one means for performing the method of one or more of claims 1 to 12.

14. A computer program comprising instructions which, when the program is executed by a computer associated with a user equipment (115), UE, cause the UE (115) to carry out the method of one or more of claims 1 to 12.

## Patentansprüche

1. Verfahren (800) zur drahtlosen Kommunikation an einem Benutzergerät, UE, umfassend:
Empfangen (805), von einer Basisstation (105), von Systeminformation, die eine Zellenneuauswahlpriorität zum Bewerten jeder Zelle einer Vielzahl von Zellen anzeigt, einschließlich einer Nachbarzelle, einer Master-Zellengruppenzelle und einer sekundären Zellengruppenzelle, wobei die Zellenneuauswahlpriorität anzeigt, dass der Nachbarzelle eine höhere Priorität zugewiesen ist als der Master-Zellengruppenzelle, der sekundären Zellengruppenzelle oder beiden, die an dem UE (115) konfiguriert sind;
Durchführen (810) einer Zellenneuauswahlprozedur, die die Neuauswahl der Master-Zellengruppenzelle, der sekundären Zellengruppenzelle oder beiden gegenüber der Nachbarzelle priorisiert; und
Herstellen (815), nachdem das UE von einem inaktiven Zustand in einen aktiven Zustand übergeht, einer Verbindung mit einer ersten Zelle der Vielzahl von Zellen basierend zumindest teilweise auf der Zellenneuauswahlprozedur.

2. Verfahren (800) nach Anspruch 1, wobei das Herstellen der Verbindung mit der ersten Zelle umfasst:
Herstellen der Verbindung mit der ersten Zelle, die die Master-Zellengruppenzelle oder die sekundäre Zellengruppenzelle ist, unter Verwendung einer Konfiguration der Master-Zellengruppenzelle oder der sekundären Zellengruppenzelle, die vor dem Übergang von dem aktiven Zustand in den inaktiven Zustand konfiguriert ist.

3. Verfahren (800) nach Anspruch 1, wobei das Durchführen der Zellenneuauswahlprozedur umfasst:
Überwachen der Master-Zellengruppenzelle oder der sekundären Zellengruppenzelle gemäß einer ersten Periodizität, die zeitlich kürzer ist als eine zweite Periodizität, mit der das UE die Nachbarzelle überwacht.

4. Verfahren (800) nach Anspruch 3, wobei das Durchführen der Zellenneuauswahlprozedur umfasst:
Durchführen einer Messung eines ersten Signals der Master-Zellengruppenzelle oder der sekundären Zellengruppenzelle gemäß der ersten Periodizität; und
Durchführen einer Messung eines zweiten Signals der Nachbarzelle gemäß der zweiten Periodizität.

5. Verfahren (800) nach Anspruch 1, wobei das Herstellen der Verbindung mit der ersten Zelle umfasst:
Herstellen der Verbindung mit der ersten Zelle, die die Nachbarzelle ist, innerhalb einer Zeitperiode basierend zumindest teilweise auf einem Signal der Nachbarzelle, das einen ersten Schwellenwert erfüllt, der relativ zu einem zweiten Schwellenwert versetzt ist, der zum Herstellen von Konnektivität mit der Master-Zellengruppenzelle, der sekundären Zellengruppenzelle oder beiden überwacht wird.

6. Verfahren (800) nach Anspruch 5, wobei der erste Schwellenwert einem höheren Signalpegel als der zweite Schwellenwert entspricht.

7. Verfahren (800) nach Anspruch 1, ferner umfassend:
Initiieren eines Timers als Reaktion auf den Übergang in den inaktiven Zustand; und
Bewerten der Master-Zellengruppenzelle und der sekundären Zellengruppenzelle vor Ablauf des Timers.

8. Verfahren (800) nach Anspruch 7, ferner umfassend:
Bewerten der Nachbarzelle nach Ablauf des Timers.

9. Verfahren (800) nach Anspruch 7, ferner umfassend:
Bestimmen einer Dauer des Timers basierend zumindest teilweise auf einer Frequenz des Übergangs von dem aktiven Zustand in den inaktiven Zustand während einer Zeitperiode.

10. Verfahren (800) nach Anspruch 1, wobei das Durchführen der Zellenneuauswahlprozedur umfasst:
Bewerten einer oder mehrerer Zellen der Vielzahl von Zellen gemäß der Zellenneuauswahlpriorität, die in der Systeminformation angezeigt wird, basierend zumindest teilweise darauf, dass das UE (115) in einem Panikmodus ist.

11. Verfahren (800) nach Anspruch 1, wobei das Durchführen der Zellenneuauswahlprozedur umfasst:
Bestimmen einer Bewertungsreihenfolge, die eine Reihenfolge anzeigt, in der die Vielzahl von Zellen bewertet werden soll, basierend zumindest teilweise auf dem Zuweisen einer höheren Priorität zu der Master-Zellengruppenzelle, der sekundären Zellengruppenzelle oder beiden als der Nachbarzelle; und
Bewerten einer oder mehrerer Zellen der Vielzahl von Zellen gemäß der Bewertungsreihenfolge.

12. Verfahren (800) nach Anspruch 1, ferner umfassend:
Bestimmen, dass die Nachbarzelle mit einer anderen Frequenz als die Master-Zellengruppenzelle und die sekundäre Zellengruppenzelle, einer anderen Funkzugangstechnologie als die Master-Zellengruppenzelle und die sekundäre Zellengruppenzelle oder beiden assoziiert ist.

13. Vorrichtung zur drahtlosen Kommunikation an einem Benutzergerät (115), UE, umfassend mindestens ein Mittel zum Durchführen des Verfahrens nach einem oder mehreren der Ansprüche 1 bis 12.

14. Computerprogramm, umfassend Anweisungen, die, wenn das Programm von einem Computer ausgeführt wird, der mit einem Benutzergerät (115), UE, assoziiert ist, das UE (115) veranlassen, das Verfahren nach einem oder mehreren der Ansprüche 1 bis 12 auszuführen.

## Revendications

1. Un procédé (800) de communication sans fil au niveau d'un équipement utilisateur, UE, comprenant :
la réception (805), à partir d'une station de base (105), d'informations système qui indiquent une priorité de resélection de cellule pour l'évaluation de chaque cellule d'une pluralité de cellules incluant une cellule voisine, une cellule de groupe de cellules maîtresses, et une cellule de groupe de cellules secondaires, la priorité de resélection de cellule indiquant qu'à la cellule voisine est attribuée une priorité plus élevée que la cellule de groupe de cellules maîtresses, la cellule de groupe de cellules secondaires, ou les deux, configurées au niveau de l'UE (115) ;
la réalisation (810) d'une procédure de resélection de cellule qui priorise une resélection de la cellule du groupe de cellules maîtresses, de la cellule du groupe de cellules secondaires, ou des deux, par rapport à la cellule voisine ; et
l'établissement (815), après que l'UE est passé d'un état inactif à un état actif, d'une connexion avec une première cellule de la pluralité de cellules sur la base au moins en partie de la procédure de resélection de cellule.

2. Le procédé (800) selon la revendication 1, dans lequel l'établissement de la connexion avec la première cellule comprend :
l'établissement de la connexion avec la première cellule qui est la cellule du groupe de cellules maîtresses ou la cellule du groupe de cellules secondaires, en utilisant une configuration de la cellule du groupe de cellules maîtresses ou de la cellule du groupe de cellules secondaires qui est configurée avant le passage de l'état actif à l'état inactif.

3. Le procédé (800) selon la revendication 1, dans lequel la réalisation de la resélection de cellule comprend :
la surveillance de la cellule du groupe de cellules maîtresses ou de la cellule du groupe de cellules secondaires conformément à une première périodicité qui est plus courte en temps qu'une seconde périodicité avec laquelle l'UE surveille la cellule voisine.

4. Le procédé (800) selon la revendication 3, dans lequel la réalisation de la resélection de cellule comprend :
la réalisation d'une mesure d'un premier signal de la cellule du groupe de cellules maîtresses ou de la cellule du groupe de cellules secondaires selon la première périodicité ; et
la réalisation d'une mesure d'un second signal de la cellule voisine selon la seconde périodicité.

5. Le procédé (800) selon la revendication 1, dans lequel l'établissement de la connexion avec la première cellule comprend :
l'établissement de la connexion avec la première cellule qui est la cellule voisine dans une période de temps sur la base au moins en partie d'un signal de la cellule voisine satisfaisant à un premier seuil qui est décalé par rapport à un second seuil surveillé pour établir une connectivité avec la cellule du groupe de cellules maîtresses, la cellule du groupe de cellules secondaires, ou les deux.

6. Le procédé (800) selon la revendication 5, dans lequel le premier seuil correspond à un niveau de signal supérieur à celui du second seuil.

7. Le procédé (800) selon la revendication 1, comprenant en outre :
l'activation d'une temporisation en réponse à un passage à l'état inactif ; et
l'évaluation de la cellule du groupe de cellules maîtresses et de la cellule du groupe de cellules secondaires avant l'expiration de la temporisation.

8. Le procédé(800) selon la revendication 7, comprenant en outre :
l'évaluation de la cellule voisine après l'expiration de la temporisation.

9. Le procédé(800) selon la revendication 7, comprenant en outre :
la détermination d'une durée de la temporisation sur la base au moins en partie de la fréquence de passage de l'état actif à l'état inactif pendant une période donnée.

10. Le procédé (800) selon la revendication 1, dans lequel la réalisation de la resélection de cellule comprend :
l'évaluation d'une ou plusieurs cellules de la pluralité de cellules conformément à la priorité de resélection de cellule indiquée dans les informations système sur la base au moins en partie de l'UE (115) qui est en un mode panique.

11. Le procédé (800) selon la revendication 1, dans lequel la réalisation de la resélection de cellule comprend :
la détermination d'un ordre d'évaluation indiquant l'ordre dans lequel évaluer la pluralité de cellules sur la base au moins en partie de l'attribution d'une priorité plus élevée à la cellule du groupe de cellules maîtresses, à la cellule du groupe de cellules secondaires, ou aux deux, par rapport à la cellule voisine ; et
l'évaluation d'une ou plusieurs cellules parmi la pluralité de cellules selon l'ordre d'évaluation.

12. Le procédé (800) selon la revendication 1, comprenant en outre :
la détermination que la cellule voisine est associée à une fréquence différente de celle de la cellule du groupe de cellules maîtresses et de celle de la cellule du groupe de cellules secondaires, à une technologie d'accès radio différente de celle de la cellule du groupe de cellules maîtresses et de celle de la cellule du groupe de cellules secondaires, ou les deux.

13. Un appareil pour la communication sans fil au niveau d'un équipement utilisateur (115), UE, comprenant au moins un moyen pour réaliser le procédé selon une ou plusieurs des revendications 1 à 12.

14. Un programme de calculateur comprenant des instructions qui, lorsque le programme est exécuté par un calculateur associé à un équipement utilisateur, UE (115), amènent l'UE (115) à réaliser le procédé selon une ou plusieurs des revendications 1 à 12.
